# EUROPEAN PATENT SPECIFICATION

(11) **EP 1 107 638 B1**
(45) Date of publication and mention of the grant of the patent: **21.12.2005**
(21) Application number: 99830759.9
(22) Date of filing: 07.12.1999
(51) Int. Cl.: H04Q 7/38

(54) **A method of enabling a customer of a mobile radio network to access an electronic mail server**
Verfahren, um einem Mobilfunknetzteilnehmer den Zugang zu einem e-mail-Dienst zu ermöglichen
Méthode pour permettre à un utilisateur d'un réseau de téléphonie mobile l'accès à un serveur de courrier électronique

(43) Date of publication of application: 13.06.2001
(73) Proprietor: TIM Italia S.p.A., 20123 Milano (IT)
(72) Inventor: Sentinelli, Mauro. c/o Telecom Italia Mobile S.p.A, 00136 ROMA (IT)
(74) Representative: Siniscalco, Fabio

(56) References cited:
- EP-A- 0 924 946
- WO-A-97/31306
- WO-A-99/26124
- US-A- 5 742 668

## Description

The present invention relates to a method of enabling a new customer of a mobile radiotelephone network to access the services of an electronic mail server, and to a system for implementing the method.

It is known that the Internet network provides a world-wide electronic mail service. Typically, in order to access this service, it is necessary to have a computer provided with a program for sending, receiving and managing electronic mail and a connection to a provider of Internet services by means of a fixed telephone network. Naturally, it is necessary to be authorized to use the telephone network and the provider's services, typically by subscription and registration with the managers of the two services.

The provider assigns an electronic mailbox to the customer and asks him to select a first code in the form of an alphanumeric string to be used as a user identification code (UID) and as a component of his electronic mail address, and a second code, also in the form of an alphanumeric string, to be used as a secret access code or password (PWD). Each time the customer wishes to access the service, he will have to supply this pair of codes to the provider.

With the development of both analog and digital mobile telephone networks, a need has arisen also to be able to access electronic mail services by a mobile radio network. EP-A- 0 924 946 discloses a system allowing a mobile terminal to retrieve electronic mail messages following an initial activation procedure requested by the terminal. One of the problems to be overcome in order to satisfy best this need is that of generating the necessary user identification codes in a simple manner.

An object of the present invention is to provide a method and a system which enable a new customer of a mobile radio network to access an electronic mail service without providing a code.

This object is achieved by the implementation of the method defined in general in Claim 1 and by the provision of the system defined in general in Claim 3.

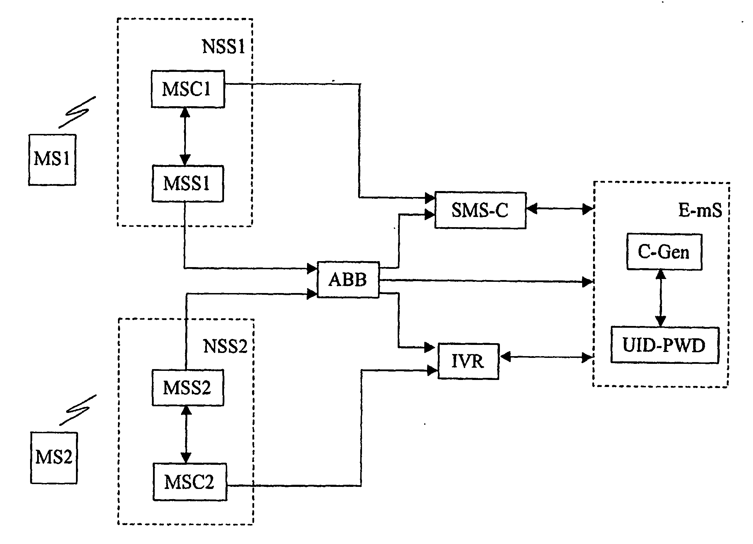

The invention will be understood better from the following detailed description of a preferred embodiment thereof, given with reference to the appended drawing, in which the sole figure shows a system which uses the method according to the invention, in the form of a greatly simplified block diagram.

In the drawing, the block MS1 represents a mobile radio terminal (a mobile station) of a digital mobile radio network (for example, a GSM network), the block NSS1 represents a digital mobile radio network subsystem comprising a mobile switching centre MSC1 and a unit MSS1 for starting charging, the block SMS-C represents a short-message service management system and the block E-mS represents an electronic mail server which contains a code generator C-GEN and a code memory UID-PWD.

The blocks MS2, NSS2, MSC2 and MSS2 represent, respectively, a mobile radio station of an analog mobile radio network (for example, a TACS network), an analog mobile radio network subsystem, an analog-network switching centre, and an analog-network unit MSS2 for starting charging.

The block ABB represents a system which manages requests for subscription to the electronic mailbox service. The block IVR represents an interactive voice responder. Finally, the block E-mS forms part of the equipment of an Internet service provider which, in this example, is also the manager of the telephone services of the two mobile radio networks. The systems SMS-C and IVR constitute two separate units for access to the server E-mS.

It is assumed that the terminal MS1 is used by a customer of the digital mobile radio network who is making his first call. An integrated-circuit card (a SIM card) is associated with the terminal MS1 and contains the customer's identity. The switching centre MSC1 sends the caller's data to the charging unit MSS1 which contains the register of identification codes of all of the SIM cards and of the telephone numbers associated therewith. When the caller is identified, a charging centre, not shown, is activated in order to debit the call to the new user and the call is routed by the switching centre MSC1 to the destination requested.

The charging unit MSS1 transmits the telephone numbers of all of the new customers who have made their first call to the system ABB, at predetermined time intervals. For each new customer, the system ABB sends to the SMS-C a request to send a short welcome message and to the E-mS a request to start an automatic procedure to activate an electronic mailbox.

The automatic activation procedure consists in sending to the server E-mS a request to generate, for each new customer, a string of characters of the length required by the server E-mS for a code PWD. The E-mS complies with this request by means of the character generator C-GEN. The string of characters and the telephone number of the new customer are stored as a code PWD and a code UID, respectively, in the codes memory UID-PWD of the system E-mS and are associated with an electronic mailbox. In practice, it may be advantageous to associate each telephone number with a box beforehand. The string of characters to be assigned to new customers may be selected randomly by a suitable program provided in the character generator.

The availability of an electronic mailbox is also announced in the welcome message to each new customer. From this moment, any electronic mail messages sent by anyone having access to the server E-mS to the electronic mailbox identified by the new customer's telephone number will be deposited in the box just made available. Naturally, the new customer can access his box, for example, to read the messages. According to the method of the invention, this is possible without the customer having to generate and send any identification code. In fact it suffices for him to send a request for access by means of a call or a short message to a conventional telephone number which is the same for all subscribers of the network. As a result of this request, the server E-mS receives the codes necessary for access. More particularly, the customer's telephone number enables the codes memory UID-PWD to be accessed and the code PWD associated with that number to be identified, after the first call. The pair of codes permits access to the server E-mS so that the contents of the mailbox associated therewith can be transmitted to the calling customer by the means available, for example, by means of the system SMS-C with one or more short messages, or by means of the system IVR, that is, with a voice message.

In the case of a subscriber to the analog network, access to the electronic mail server will be similar to that described above. In this case also, the caller's identity will be authenticated by the detection of his telephone number. The charging unit MSS2 will send the data of all new customers to the system ABB. For each new customer, the system will generate to the IVR a request to send a welcome voice message and to the E-mS a request to start an automatic procedure for activating an electronic mailbox. Upon completion of the procedure, the telephone number of each new customer and the respective string of characters issued by the generator C-GEN are entered in the register of the server E-mS as pairs of identification codes (UID and PWD) to be associated with an electronic mailbox to be assigned to the customer.

Both the customer of the analog network and the customer of the digital network can read the messages sent to the box in voice form as a result of a suitable request, that is, by a call to a conventional telephone number, which will activate the system IVR in order to convert the mail message into a voice message. Digital network customers can also access their own electronic mailboxes by means of the system SMS-C.

Both digital network customers and analog network customers can ask the IVR to change their own code PWD stored in the register of identification codes of the server E-mS by making a call to a single conventional telephone number. This does not modify the operation of the access method, since the new string PWD defined by the customer will in any case be accessible by using the telephone number associated therewith. Digital network customers can also ask to change the code PWD by means of a short message.

## Claims

1. A method of enabling a new customer of a mobile radio telephone network to access the services of an electronic mail server (E-mS) which requires the input of two identification codes (UID, PWD) for access, the method being **characterized in that** it comprises the following steps:
- establishing a telephone connection between a telephone (MS1, MS2) of the new customer and a switching centre (MSC1, MSC2) of the network,
- identifying the new customer by authentication of the data which is transmitted to the switching centre (MSC1, MSC2) by the above-mentioned connection and which comprises the new customer's telephone number,
- establishing a connection between the switching centre (MSC1, MSC2) and the electronic mail server,
- generating a string of characters (PWD), and
- recording the new customer's telephone number and the string of characters generated as the two identification codes (UID, PWD) of the new customer for the electronic mail server (E-mS) and associating an electronic mailbox therewith.

2. A method according to Claim 1, in which the string of characters (PWD) is generated randomly.

3. A system for implementing the method according to Claim 1 or Claim 2, comprising:
- a mobile radiotelephone network system with a plurality of telephones (MS1, MS2) of customers of the network, at least one switching centre (MSC1, MSC2), and at least one unit for identifying the telephone number of a customer calling,
- an electronic mail server (E-mS) which requires two codes (UID, PWD) for access,
- means (SMS-C, IVR) for access to the electronic mail server (E-mS),
- a generator (C-GEN) of strings of characters of the type usable for one (PWD) of the two access codes,
- means (ABB) for connection between at least one switching centre (MSC1, MSC2) of the mobile radio network system and the means (SMS-C, IVR) for access to the server,
- means for exchanging data between the means (SMS-C, IVR) for access to the server, the code generator (C-GEN), and the server (E-mS), and
- a code memory (UID-PWD) associated with the server (E-mS).

4. A system according to Claim 3, in which the access means comprise a management system of a short-message service (SMS-C).

5. A system according to Claim 3 or Claim 4, in which the access means comprise a voice responder (IVR).

6. A system according to any one of Claims 3 to 5, in which the connection means comprise a system (ABB) for managing subscription requests.

## Patentansprüche

1. Ein Verfahren, um einen neuen Kunden eines Mobilfunk-Telefonnetzwerks in die Lage zu versetzen, auf die Dienstleistungen eines Servers für elektronische Post (E-mS) zuzugreifen, was die Eingabe zweier Identifizierungscodes (UID, PWD) für einen Zugriff erfordert, wobei das Verfahren **dadurch gekennzeichnet ist, daß** es folgende Schritte umfaßt:
- Herstellen einer Telefonverbindung zwischen dem Telefon eines neuen kunden (MS1, MS2) und einer Vermittlungszentrale (MSC1, MSC2) des Netzwerks,
- Identifizieren des neuen Kunden durch Authentifizierung der Daten, die durch die oben erwähnte Verbindung an die Vermittlungszentrale (MSC1, MSC2) gesandt werden und die Telefonnummer des neuen Kunden aufweisen,
- Herstellen einer Verbindung zwischen der Vermittlungszentrale (MSC1, MSC2) und dem Server für elektronische Post,
- Erzeugen einer Zeichenkette (PWD), und
- Aufzeichnen der Telefonnummer des neuen kunden und der erzeugten Zeichenkette als die beiden Identifizierungscodes (UID, PWD) des neuen kunden für den Server für elektronische Post (E-mS), und Zuordnen einer elektronischen Mailbox zu demselben.

2. Ein Verfahren gemäß Anspruch 1, bei dem die Zeichenkette (PWD) zufällig erzeugt wird.

3. Ein System zum Implementieren des Verfahrens gemäß Anspruch 1 oder 2, das folgende Merkmale aufweist:
- ein Mobilfunk-Telefonnetzwerksystem mit einer Mehrzahl von Telefonen (MS1, MS2) von Kunden des Netzwerks, mindestens einer Vermittlungszentrale (MSC1, MSC2) und mindestens einer Einheit zum Identifizieren der Telefonnummer eines anrufenden Kunden,
- einen Server für elektronische Post (E-mS), der zwei Codes (UID, PWD) für einen Zugriff erfordert,
- eine Einrichtung (SMS-C, IVR) für einen Zugriff auf den Server für elektronische Post (E-mS),
- einen Generator (C-GEN) von Zeichenketten des Typs, der für einen (PWD) der beiden Zugriffscodes verwendbar ist,
- eine Einrichtung (ABB) für eine Verbindung zwischen mindestens einer Vermittlungszentrale (MSC1, MSC2) des Mobilfunknetzwerksystems und der Einrichtung (SMS-C, IVR) für einen Zugriff auf den Server,
- eine Einrichtung zum Austauschen von Daten zwischen der Einrichtung (SMS-C, IVR) für einen Zugriff auf den Server, dem Codegenerator (C-GEN) und dem Server (E-mS), und
- einen Codespeicher (UID-PWD), der dem Server (E-mS) zugeordnet ist.

4. Ein System gemäß Anspruch 3, bei dem die Zugriffseinrichtung ein Verwaltungssystem eines Kurznachrichtendienstes (short-message service (SMS-C)) aufweist.

5. Ein System gemäß Anspruch 3 oder 4, bei dem die Zugriffseinrichtung ein Sprachantwortgerät (IVR) aufweist.

6. Ein System gemäß einem der Ansprüche 3 bis 5, bei dem die Verbindungseinrichtung ein System (ABB) zum Verwalten von Teilnahme-Anforderungen aufweist.

## Revendications

1. Procédé pour permettre au nouveau client d'un réseau téléphonique radio mobile d'accéder aux services d'un serveur de courrier électronique (E-mS) qui nécessite l'entrée de deux codes d'identification (UID, PWD) d'accès, le procédé étant **caractérisé en ce qu'**il comprend les étapes suivantes :
- l'établissement d'une connexion téléphonique entre le téléphone (MS1, MS2) d'un nouveau client et un central de commutation (MSC1, MSC2) du réseau,
- l'identification du nouveau client par authentification des données qui sont transmises au central de commutation (MSC1, MSC2) par la connexion mentionnée ci-dessus et qui comprennent le numéro de téléphone du nouveau client,
- l'établissement d'une connexion entre le central de commutation (MSC1, MSC2) et le serveur de courrier électronique,
- la génération d'une chaîne de caractères (PWD), et
- l'enregistrement du numéro de téléphone du nouveau client et de la chaîne de caractères générée en tant que les deux codes d'identification (UID, PWD) du nouveau client du serveur de courrier électronique (E-mS) et l'association à ceux-ci d'une boîte aux lettres électronique.

2. Procédé selon la revendication 1, dans lequel la chaîne de caractères (PWD) est générée aléatoirement.

3. Système pour mettre en oeuvre un procédé selon la revendication 1 ou 2, comprenant :
- un système de réseau téléphonique radio mobile comportant une pluralité de téléphones (MS1, MS2) de clients du réseau, au moins un central de commutation (MSC1, MSC2), et au moins une unité destinée à identifier le numéro de téléphone d'un client en cours d'appel,
- un serveur de courrier électronique (E-mS) qui nécessite deux codes (UID, PWD) d'accès,
- des moyens (SMS-C, IVR) pour accéder au serveur de courrier électronique (E-mS),
- un générateur (C-GEN) de chaînes de caractères du type pouvant être utilisé en tant que l'un (PWD) des deux codes d'accès,
- des moyens (ABB) de connexion entre au moins un central de commutation (MSC1, MSC2) du système de réseau téléphonique radio mobile et les moyens (SMS-C, IVR) d'accès au serveur,
- des moyens pour échanger des données entre les moyens (SMS-C, IVR) d'accès au serveur, le générateur de code (C-GEN), et le serveur (E-mS), et
- une mémoire de code (UID-PWD) associée au serveur (E-mS).

4. Système selon la revendication 3, dans lequel les moyens d'accès comprennent un système de gestion d'un service de mini-messages (SMS-C).

5. Système selon la revendication 3 ou 4, dans lequel les moyens d'accès comprennent un répondeur vocal (IVR).

6. Système selon l'une quelconque des revendications 3 à 5, dans lequel les moyens de connexion comprennent un système (ABB) de gestion de requêtes d'abonnement.
